# EUROPEAN PATENT SPECIFICATION

(11) **EP 2 507 058 B1**
(45) Date of publication and mention of the grant of the patent: **24.06.2015**
(21) Application number: 10832723.0
(22) Date of filing: 28.10.2010
(51) Int. Cl.: B32B 37/06, B32B 37/12, B32B 37/08

(54) **NIP ROLLER WITH INTERNAL ENERGY SOURCE AND LAMINATION METHOD**
ANDRUCKWALZE MIT INTERNER ENERGIEQUELLE UND LAMINIERVERFAHREN
ROULEAU PINCEUR PRÉSENTANT UNE SOURCE D'ÉNERGIE INTERNE ET METHODE DE LAMINAGE

(30) Priority: 30.11.2009 US 264923 P
(43) Date of publication of application: 10.10.2012
(73) Proprietor: Scodix, Ltd., Rosh Hayyin (IL)
(72) Inventor: GRINBERG, Eli, Pardesia 42815 (IL); BAR, Kobi, 44259 Kefar Sava (IL); AKNIN, Ofer, Petach Tikva (IL)
(74) Representative: White, Duncan Rohan
(86) International application number: PCT/IB2010/003225
(87) International publication number: WO 2011/064670

(56) References cited:
- EP-A1- 0 654 347
- EP-A2- 0 500 047
- EP-A2- 0 860 294
- WO-A2-2009/040797
- BE-A3- 1 007 854
- JP-A- 56 126 123
- US-A- 4 435 069
- US-A- 5 612 774
- US-A1- 2006 177 250
- US-B2- 7 623 817

## Description

### FIELD OF THE DISCLOSURE

The present disclosure generally pertains to a system and method for performing pressing operations, and more particularly to a system and method using a nip roller with an energy source.

### BACKGROUND OF THE DISCLOSURE

Pressing machines to press, for example, foil, or other layer materials, on paper, plastic, metal and other substrates by performing selective heating and pressing of the foil onto the printable substrate are disclosed, for example, in US Patent 4,717,615, 4,837,072, and 5,053,260.

Generally, adhesive is deposited on a side of the printing foil adjacent to the printable substrate. The adhesive is then cured using, for example, an energy source, such as a lamp, an ultraviolet source, etc. The energy (e.g., UV energy) applied to adhesive initiates a curing process to cause the adhesive to adhere or bond to the materials applied therewith (e.g., the substrate and/or the foil). Subsequently, pressed and heated areas of the foil become adhered. After removing a foil backing the areas that have undergone pressure and heat exposure remain on the substrate, whereas unexposed areas are removed with the foil backing.

BE-A-1007854 discloses a device for manufacturing an image element: an initial substrate is covered with plastic to an image forming layer on a second substrate which is illuminated with an image using laser beams. The device has a pair of press cylinders with a glass cylinder, the said glass cylinder has an internal infra-red heating element and an opposing cylinder, the said opposing cylinder is covered with an elastic housing, which provides the desired pressure and the nip-formation.

A further device with an internally heated roller is described in JP 56-126123.

### SUMMARY OF THE DISCLOSURE

The subject matter disclosed herein is directed to a nip-roller with an energy source, to enable directly applying energy to the materials being pressed substantially concomitantly while the pressing operation is performed. The subject matter disclosed herein is further directed to a pressing machine that includes a nip roller with an energy source, and a pressing method using a nip roller with an energy source.

The invention provides a nip roller in accordance with claim 1.

In one aspect, a pressing machine to press layer material to a curable adhesive deposited on a substrate received at an entry stage of the pressing machine is disclosed. The pressing machine includes at least one nip roller to press the layer material to the substrate with the curable adhesive deposited thereon, at least a portion of the at least one nip roller being constructed from a material to enable passage of energy, the at least one nip roller having an inner volume. The pressing machine also includes at least one energy source to generate energy directed at the curable adhesive to cause a curing process of the adhesive to occur, the at least one energy source is disposed within the inner volume of the at least one nip roller. At least some of the energy generated by the energy source is directed through the at least the portion of the nip roller constructed from the material configured to enable passage of energy to be applied to the curable adhesive deposited on the substrate.

Embodiments of the machine may include any of the features described in the present disclosure, including any of the following features.

The material configured to enable passage of at least some of the generated energy may include radiation-transparent material including one or more of, for example, polypropylene, glass, quartz, and/or polycarbonate.

The at least one energy source may include one or more of, for example, an ultraviolet radiation source, a lamp to generate incoherent optical radiation, an electron beam radiation source, a laser source, and/or a heating element.

The machine may further include at least another energy source positioned upstream of the at least one nip roll, the at least other energy source configured to direct energy to cause one of, for example, pre-curing the curable adhesive and initiating the curable adhesive.

The machine may further include a support structure placed, at least partly, within the inner volume of the nip roller, with the at least one energy source being secured to the support structure.

The machine may further include an energy guidance mechanism to direct the energy generated by the at least one energy source to an area of the at least the portion of the at least one nip roller constructed from the material configured to enable passage of energy.

The machine further includes a cooling mechanism to control temperature in the inner volume of the nip roller.

The cooling mechanism may include a hollow reflector including a reflective surface facing the at least one energy source, the reflective surface configured to selectively reflect radiation of one or more predetermined wavelengths, and to pass radiation of one or more other predetermined wavelengths. The cooling mechanism also includes cooling medium inside an interior of the hollow reflector to perform one or more of, for example, absorbing, and/or removing the one or more other predetermined wavelengths that passed through the reflective surface.

In another aspect, a system is disclosed. The system includes a printer to deposit a pre-determined pattern of curable adhesive on a substrate, and a pressing machine to press layer material to the substrate with the patterned curable adhesive deposited thereon, the substrate being received at an entry stage of the pressing machine. The pressing machine includes at least one nip roller to press the layer material to the substrate with the curable adhesive deposited thereon, at least a portion of the at least one nip roller being constructed from a material to enable passage of energy, the at least one nip roller having an inner volume. The pressing machine also includes at least one energy source to generate energy directed at the curable adhesive to cause a curing process of the adhesive to occur, the at least one energy source being disposed within the inner volume of the at least one nip roller. At least some of energy generated by the at least one energy source is directed through the at least the portion of the at least one nip roller constructed from the material configured to enable passage of energy to be applied to the curable adhesive deposited on the substrate.

Embodiments of the system may include any of the features described in the present disclosure, including any of the features described above in relation to the machine and the features described below, including any one of the following features.

The printer may include one or more of, for example, an inkjet printer, a toner-based printer, a silk screen printer, and/or a lithography-based printer.

The at least one nip roller may include a first set of nip rollers positioned proximate to the entry stage of the pressing machine to press the layer material to the adhesive deposited on the substrate when the substrate is substantially received in the pressing machine, and a second set of nip rollers positioned proximate to an exit stage of the pressing machine to press the layer material to the cured adhesive deposited on the substrate after application of energy by the at least one energy source.

The system may further include a conveyor belt to move the substrate having the curable adhesive deposited on it through the pressing machine.

The system may further include a peeler to peel off excess layer material not adhered to any portion of the cured adhesive.

Embodiments of the nip roller may include any of the features described in the present disclosure, including any of the features described above in relation to the pressing machine, the system, and the features described below.

The details of one or more variations of the subject matter described herein are set forth in the accompanying drawings and the description below. Other features and advantages of the subject matter described herein will be apparent from the description and drawings, and from the claims.

### BRIEF DESCRIPTION OF THE DRAWINGS

These and other aspects will now be described in detail with reference to the following drawings.
FIG. 1 is a schematic diagram of an example pressing machine having a nip roller with an energy source.
FIG. 2 is a diagram of a nip roller with an energy source disposed therein.
FIG. 3 is a schematic diagram of another example pressing machine.
FIG. 4 is a cross-sectional diagram of a nip roller with an energy source disposed therein, and a cooling mechanism to remove excess heat.
FIG. 5 is a flowchart of a pressing procedure.

Like reference symbols in the various drawings indicate like elements.

### DETAILED DESCRIPTION

Disclosed are systems, machines, devices and methods, including a pressing machine to press layer materials, such as foil, to a curable adhesive deposited on a substrate. The pressing machine includes at least one nip roller to press layer material to the substrate with the curable adhesive deposited on it. At least a portion of the nip roller is constructed from a material (e.g., an energy transparent material) to enable passing of energy generated by the energy source, with the at least one nip roller including an inner volume. At least one energy source (e.g., to produce heat and/or radiation) is disposed within the inner volume of the nip roller. The energy source is configured to generate heat/radiation directed at the curable adhesive to cause a curing process of the adhesive to occur. At least some of the heat/radiation generated by the energy source upon activation of the energy source is directed through the at least the portion of the nip roller constructed from the material that enables passage of heat/radiation and is applied to the curable adhesive deposited on the substrate.

The term 'Inkjet Printing' or 'Inkjetting' refers hereinafter to an adaptation of the conventional technology developed for the deposition of ink onto paper, including: thermal inkjets, piezoelectric inkjets and continuous inkjets, as a mechanism for the deposition of various materials in liquid form, including adhesive, onto a substrate. An inkjet can include, for example, a conventional an inkjet printer, a toner-based printer, a silk screen printer and/or a lithography-based printer.

The term 'foil' refers hereinafter to film or sheet of any material having a thickness of, for example, about 4 microns to 40 microns. In some embodiments, the foil is made from metal. The foil may have a foil layer and foil backing layer.

The term 'nipping' refers hereinafter to the action of tightly holding or squeezing at least two items together.

The term 'curing' refers hereinafter to the toughening or hardening of a material (e.g., polymer material) by cross-linking of polymer chains, brought about by procedures that include, for example, procedures based on use of chemical additives, ultraviolet radiation, electron beam (EB), heat, etc.

The term 'relief' refers hereinafter to a pattern or modeled form that is raised (or alternatively lowered) from a flattened background.

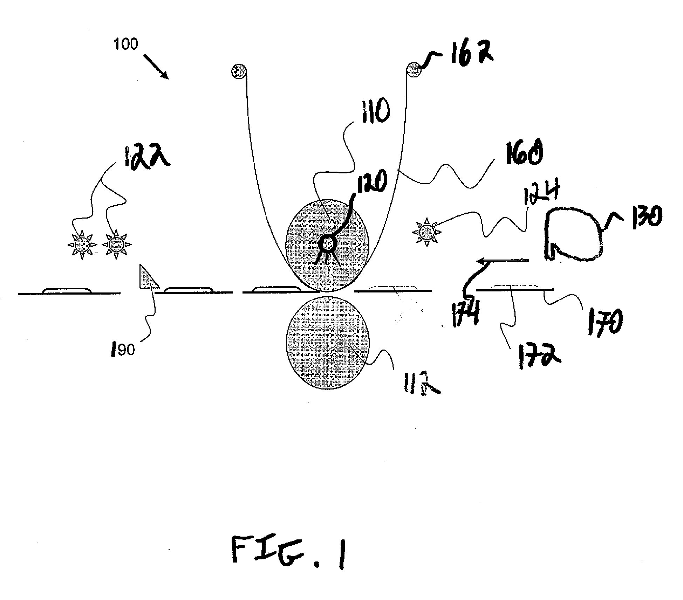

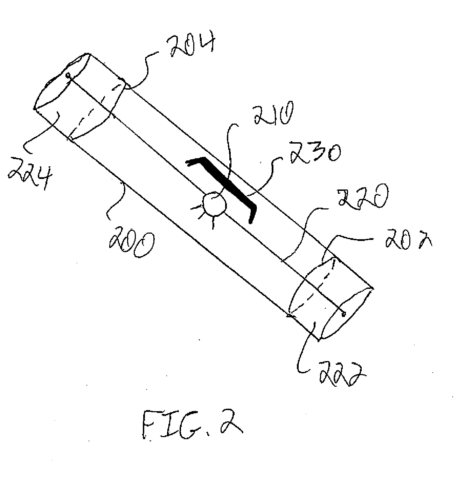

With reference to FIG. 1, a schematic diagram of pressing system/machine 100 is shown. The machine 100 includes a nip roller 110 with an energy source 120 disposed therein. With reference to FIG. 2, a diagram of a nip roller 200 and an energy source 210 disposed in the nip roller is shown. The nip roller 200 is generally a hollow cylindrical structure (e.g., tube-like) configured, for example, to be rotated about its longitudinal axis. Torque-transfer mechanisms (not shown), such as a gear assembly connected to a motor, actuate the nip roller to cause it to rotate about its longitudinal axis to thus apply pressure on materials brought in contact with the nip roller. The nip roller 200 is constructed from a material that enables transfer of energy generated by the energy source 210. For example, in some implementations, the energy source may be a radiation source such as a lamp generating incoherent optical radiation, a laser source, a UV source, an electron beam generator, a heating element, etc. The nip roller may be constructed from a radiation-transparent material, such as, for example, polypropylene, glass, quartz, polycarbonate etc. Optical radiation generated by the energy source 210 may then pass through the radiation transparent material of the walls of the nip-roller 200, and be applied to the items being pressed. In some implementations, the energy generated by the energy source may be thermal energy, and accordingly, under those circumstances, the nip-roller 200 may be constructed from heat conducting materials, such as metals. Other type of energy sources and corresponding suitable materials from which to construct the nip roller to enable the generated energy to pass through such materials may be used.

In some embodiments, only part of the nip roller 200 may be constructed from materials suitable to enable generated energy to pass therethrough. For example, in some embodiments, only a section of the circular cross-section of the nip roller, spanning an arc of less than the full 360° of the cross-section of the nip roller may be constructed from a material to enable passage of energy from the heat source 210 through the walls of the nip-roller. For example, one radial section of the nip roller may be constructed from radiation transparent materials, whereas the other radial section may be constructed from radiation opaque materials that prevent passage of energy incident on it to the external area outside the nip roller 200. Such implementations may be used to regulate, for example, the level of energy that passes through the nip roller and applied to the items that are being pressed.

As further shown in FIG. 2, the energy source 210 disposed within the interior of the nip roller 200 may be supported by a support structure 220 that holds the energy source 210 in a position and/or orientation to enable generated energy to be directed to the proper area of the nip roller so that the emitted energy can be transferred to the outside of the nip roller 200. For example, in some implementations, the support structure 220 may be a shaft on which the energy source 210 is rigidly mounted. The shaft 220 may be secured at its end to non-rotateable members 222 and 224 that flank the nip roller 200. Thus, in such implementations, when the nip roller 200 rotates, the energy source 210 remains stationary so that its generated energy continues to be directed at a substantially constant direction even as the nip-roller itself rotates.

In some implementations, the shaft 220 (or other implementations of a support structure supporting the energy source 210) may be secured to the end walls 202 and 204 of the nip roller 200 such that rotation of the nip roller will cause a corresponding rotation of the heating source 210. In some embodiments, the energy source may not be rigidly mounted to the support structure, but rather may be pivotally secured or mounted to the support structure such that upon rotation of the nip roller 200 and the corresponding rotation of the support structure, the position and orientation of the heating source 210 remain substantially the same.

In some embodiments, the energy source 210 may be fitted with an energy guidance system to direct and/or focus the generated energy at a particular direction within the nip roller. For example, as depicted in FIG. 2, in implementations in which the energy source is an optical radiation source such as a lamp or a UV source, the energy source 210 may be fitted within a reflector 230 that controllably directs generated optical radiation towards, for example, the lower part of the nip roller, to thus controllably apply energy to the items being pressed.

In some implementations, the energy generated by the energy source and directed to an area of the nip roller through which the energy passes and applied to the items to be pressed can be regulated. For example, the energy source 210 may be controlled by a controller (not shown) that regulates the level of energy generated by the energy source 210. Such controllers may be implemented, for example, as processor-based devices. In some embodiments, a regulation device, such as a shutter mounted on the guidance mechanism to control how much energy is applied to the items may be used.

Other configurations, implementations and/or structures for the nip roller and/or the energy source 210 disposed within the nip roller 200 may be used.

Turning back to FIG. 1, as shown, a printer device (printer head) 130 deposits (or prints) on a substrate 170 a pattern composed of a thin, e.g., generally a layer having a thickness of any where from about 4 to about 200 microns, of curable adhesive 172. In some embodiments, the curable adhesive may have an initial viscosity of about 10 cps. The curable adhesive may be, for example, one of various commercial adhesive having an initial non-tacky surface, and can also be, in some implementation, a curable adhesive similar to the adhesive described in co-owned PCT application No. PCT/IL2008/001269, entitled "A System and Method for Cold Foil Relief Production." Such a curable adhesive can be pre-cured to commence the curing process, but without causing the adhesive to become tacky, and after the pressing of a foil on the substrate having the patterned adhesive, the adhesive is cured to cause it to become tacky and thus to cause the foil (or some other upper layer material), adhesive and substrate materials to adhere to each other. The substrate 170 may be constructed from a material composition including, for example, metal, plastic, paper, glass, non-woven fabric, methacrylic copolymer resin, polyester, polycarbonate and polyvinyl chloride, plastic, paper, glass, non-woven fabric, methacrylic copolymer resin, polyester, polycarbonate and/or polyvinyl chloride. The substrate 170 may be in sheet form or roll form and may be rigid or flexible.

The substrate 170 printed with the curable adhesive 172 (which may be patterned) is advanced by a transporter, such a conveyor belt, in a direction 174. The substrate 170 topped with the pattern of the curable adhesive is pressed against a section of a web 160 (of foil or some other layer material), fed from a spool 162. As the adhesive topped substrate passes under the nip roller 110, energy generated by the energy source 120 disposed in the nip roller is directed to the area of the nip roller proximate to where the layer material (foil) pressed against the adhesive topped substrate is passing, thus causing the curing operation of the curable adhesive to be performed. The application of energy from the energy source is thus substantially concomitant with the pressing of the upper layer material (e.g., the foil) to the substrate with the adhesive. As a result, the adhesive being cured, and the layers in the structure, including the substrate, adhesive and foil, adhere to each other.

The processed layered structure that emerges past the nip roller 110 can then be processed by, for example, a peeler 190 to peel away excess foil. In some embodiments, the processed layered structure may be subjected to further energy from one or more energy source 122 (which may be similar to the energy source 120) to complete the curing process of the adhesive and/or to solidify the adhesion of the foil to the substrate.

In some embodiments, the system 100 may include another roller 112 (which may or may not include an energy source) to subject the layered structured item being advances through the nipping assembly to nipping forces from opposite positioned rollers.

In some embodiments, the system 100 may optionally also include another energy source 124 positioned downstream of the nip roller 110. The energy source 124 may be used, for example, to perform pre-curing on the curable adhesive to cause commencement of the curing process but without the adhesive becoming, at that point, tacky. Such implementations may be used in situations in which the curable adhesive described in PCT application No. PCT/IL2008/001269 is used.

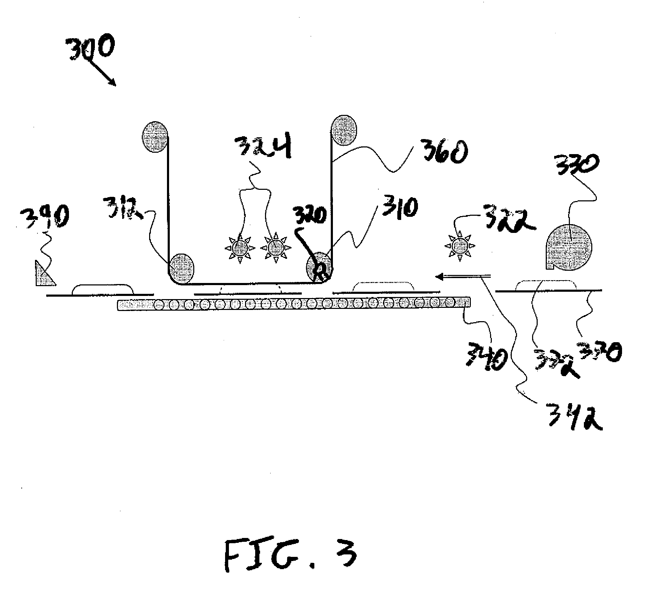

FIG. 3 illustrates another example of a pressing system 300. The system 300 includes an inkjet printer 330 to inject, for example, a pattern composed of a layer of, for example, about 4 to 200 microns of adhesive 372 onto a substrate 370, with the surface of the adhesive being non-tacky at this point. A conveyer belt 340 advances the adhesive-topped substrate in a direction 342, exposing it en route to energy (e.g., heat/radiation) directed from an energy source 322, thus initiating the curing of the adhesive and manipulating the adhesive's viscosity. The adhesive-topped substrate is then nipped by a nip roller 310 having an energy source 320 disposed in the nip roller 310. The arrangement of the nip roller 310 and the energy source 320 may be similar to the arrangements of the nip roller 110 and the energy source 120 of FIG. 1, and/or the nip roller 200 and the energy source 210 of FIG. 2. As a section of a foil web 360 (or any other upper layer material to be pressed to the substrate) comes in contact with the adhesive topped substrate that are passing under the nip roller 310, the energy source 320 may be activated (if it is not already active) to cause curing of the now pre-cured adhesive, thus causing the adhesive to become, for example, tacky and/or become hardened.

In some embodiments, the resultant layered structure emerging past the nip roller 310 may be subjected to further heat/radiation from an energy source 324 positioned between the nip roller 310 and a distal nip roller 312. The layered structured emerging past the nip roller 312 may have excess foil peeled by a peeler 390.

In some embodiments, the energy source used may be an incoherent light source that generates optical radiation at multiple wavelengths. An example of such a light source is a UV mercury lamp made by Nordson UV Systems. Other suitable light sources may be used as well. In some embodiments, such lamps used in conjunction with the nip roller may generate optical radiation in which 90-95% of the energy is radiated in the infrared ranges, and 5-10% of the energy is emitted, for example, in the UV range, which, as described herein, is the radiation component that may be used to cure the curable adhesive (i.e., curable adhesive configured to be cured upon application of UV energy). Lamp-type energy sources producing energy in which much of the energy is concentrated in the IR range can result in the production of a large amount of heat, which, in turn, causes high lamp temperature. In implementations where such lamp-type energy sources are disposed within a nip roller (in a manner similar to that depicted in FIGS. 1, 2 and 3) such generated heat can also result in a very high temperature (e.g., 800° C) within the nip roller and/or at the walls of the nip roller. Such high temperatures can damage the nip roller and/or other components of the press system, and may also damage the object being pressed (e.g., print products).

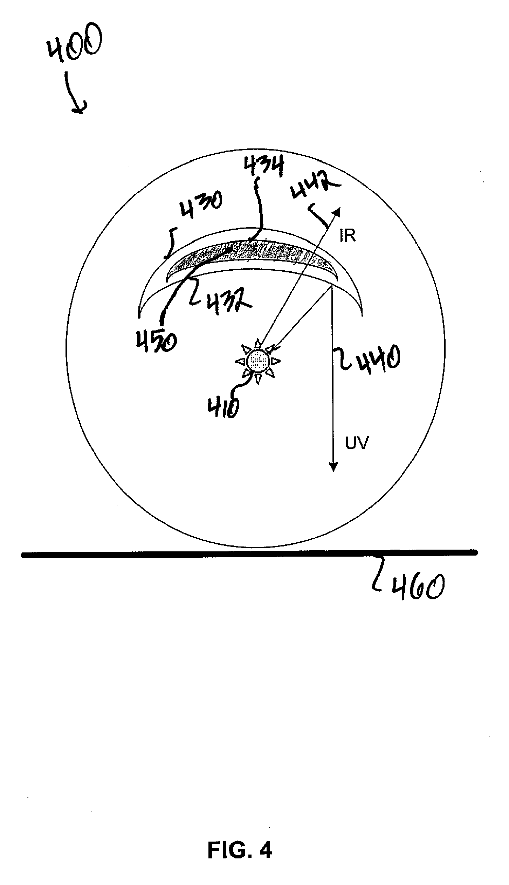

Thus, the press nip roller and/or the press system includes a cooling mechanism to remove thermal energy from the nip roller and/or the system. With reference to FIG. 4, a cross section diagram of a nip roller 400 that includes a lamp-based energy source, and also includes a cooling mechanism is shown. Similar to the nip roller depicted, for example, in FIG. 2, the nip roller 400 may include one or more energy sources, such as an energy source 410, disposed within the interior of the nip roller 400. As noted, in some the implementations, the energy source may be an incoherent lamp. The energy source 410 may be supported by a support structure (not shown), which may be similar to the support structure 220 depicted in FIG. 2, to hold the energy source 410 in a desirable position and/or orientation.

As further shown in FIG. 4, in some embodiments, the energy source 410 may be fitted with an energy guidance system, such as a reflector 430, to direct and/or focus the generated energy at a particular direction within the nip roller. The reflector 430 may be configured to direct at least some of generated optical radiation towards the lower part of the nip roller. Particularly, in the embodiments depicted in FIG. 4, the reflector 430 is implemented as an elongated closed hollow structure with a lower reflective surface 432 facing the energy source 410. The reflective surface 432 may be structured to have geometries that depend on how the desired light components are to be reflected or distributed towards the part of the nip roller 400 that contacts the objects to be pressed (e.g., foil and/or substrate objects, such as a substrate 460). Thus, in some embodiments, the reflective surface 432 may have a substantially concaved surface (i.e., a curved surface, with the surface curving outwardly away from the energy source 410), having a substantially hyperbolic surface geometry, a substantially semi-spherical surface, etc., to enable focusing the reflected radiation components towards particular points/portions of the nip roller 400 that contact the objects to be pressed. In some implementations, the reflective surface 430 may be substantially flat, substantially convexed (to distribute the radiation in some pre-determined manner), or may have any other suitable and/or desirable geometry.

In the embodiments of FIG. 4, the reflector 430 also enables the implementations of a cooling mechanism. Particularly, the reflective surface 432 may be configured to filter radiation components in some pre-determined manner such that certain radiation components pass through the reflective surface 432, while other radiation components are reflected. Thus, for example, in some implementations, the reflective surface 432 may be constructed as a dichroic mirror, or as a dielectric mirror, to selectively pass certain radiation wavelengths and reflect other radiation wavelengths. For example, the selectively reflective surface 432 may be configured to reflect wavelength in approximately the UV range, such as the radiation component 440, while enabling at least some other optical radiation components, such as radiation component 442 in approximately the IR range, to pass through the reflective surface 432 and enter an interior portion 434 of the hollow reflector 430.

As further illustrated in FIG. 4, in some embodiments, the interior portion 434 of the reflector 430 may hold coolant medium 450 to absorb and/or disperse at least some of the radiation components that pass through the selectively reflective surface 432. In some embodiments, the coolant medium may be fluid (liquid or gas) such as water or air, which may be flowing (using, for example, a pump, to cause the fluid to flow) though the interior 434 of the reflector 430. The medium 450 thus absorbs and/or removes energy of the radiation components, such as the IR component that passed through the reflective surface 432. For example, in implementations in which the energy source 410 is an incoherent lamp that generates significant optical radiation in the IR wavelength range, water flowing in the interior 434 of the reflector 430 absorbs the IR radiation and can remove the absorbed energy.

Other implementations to cool the energy source and/or the nip roller may also be used. For example, in some embodiments, a nip roller, such as the nip roller 400 of FIG. 4, may include multiple venting openings in the walls of the nip roller. A fan, positioned either inside or outside of the nip roller can cause air in the interior of the nip roller to flow and/or exit the nip roller (e.g., through the multiple venting openings) to thus cool down the nip roller and/or energy source disposed therein, to maintain the temperature inside the nip roller at a safe operation level. Other implementations of cooling mechanisms are possible and may be used as well.

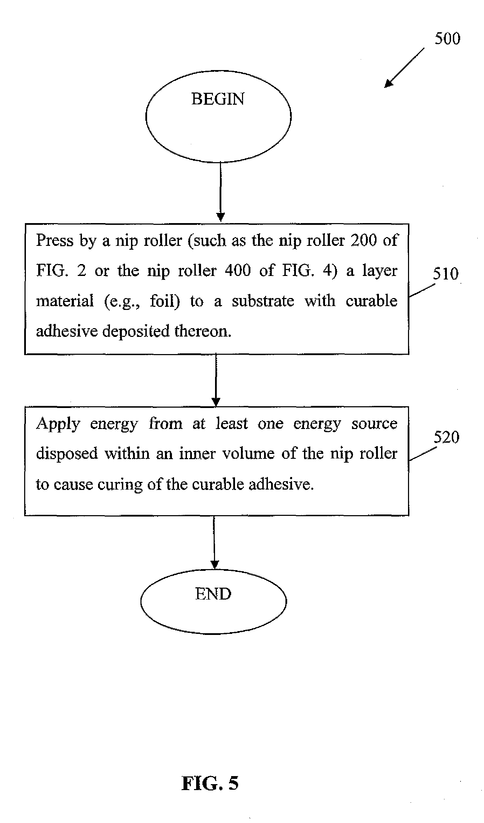

Referring to FIG. 5, a flowchart of a procedure 500 to perform pressing operations is shown.

As illustrated, a nip roller, such as the nip rollers 200 or 400 depicted in FIGS. 2 and 4, respectively, presses 510 an upper layer material (e.g., foil) to a substrate having a curable adhesive deposited thereon. Subsequently, energy from at least one energy source disposed within an inner volume of the nip roller is applied 520 (e.g., substantially concomitantly with the pressing) to cause curing of the adhesive so that the substrate and upper layer material adhere to each other. As noted, suitable energy sources include, for example, an ultraviolet radiation source, a lamp to generate incoherent optical radiation, an electron beam radiation source, a laser source, a heating element, etc.

A number of embodiments have been described. Nevertheless, it will be understood that various modifications may be made without departing from the scope of the invention. Accordingly, other embodiments are within the scope of the following claims.

## Claims

1. A nip roller comprising:
a hollow roller (110) to press materials, at least a portion of the hollow roller( 110) being constructed from a material configured to enable passage of energy; and
at least one energy source (120) disposed within an inner volume of the hollow roller (110) to generate energy, at least some of the energy being directed through at least the portion of the hollow roller (110) constructed from the material configured to enable passage of energy to cause a curing process for a curable adhesive (172) deposited on a substrate (170) and pressed against a layer material (160) to occur; and
a cooling mechanism to control the temperature in the inner volume of the nip roller.

2. The nip roller of claim 1, wherein the material configured to enable passage of at least some of the generated energy includes radiation-transparent material including one or more of: polypropylene, glass, quartz and polycarbonate.

3. The nip roller of claim 1 or 2, wherein the at least one energy source includes one or more of: an ultraviolet radiation source, a lamp to generate incoherent optical radiation, an electron beam radiation source, a laser source and a heating element.

4. The nip roller of claim 1, 2 or 3, further comprising:
an energy guidance mechanism (230) to direct the energy generated by the at least one energy source to an area of the at least the portion of the nip roller constructed from the material configured to enable passage of energy.

5. The nip roller of claim 1, 2, 3 or 4, wherein the cooling mechanism comprises a hollow reflector (430) including a reflective surface (432) facing the at least one energy source, the reflective surface configured to selectively reflect radiation of one or more predetermined wavelengths (440), and to pass radiation of one or more other predetermined wavelengths (442); and
cooling medium (450) inside an interior (434) of the hollow reflector (430) to perform one or more of absorbing, and removing the one or more other predetermined wavelengths (442) that passed through the reflective surface.

6. A pressing machine (100) to press layer material (160) to a curable adhesive (172) deposited on a substrate (170) received at an entry stage of the pressing machine (100), the pressing machine (100) comprising at least one nip roller in accordance with any one preceding claim.

7. The pressing machine (100) of claim 6, further comprising:
at least another energy source (124) positioned upstream of the at least one nip roller (110), the at least another energy source (124) configured to direct energy to cause one of pre-curing the curable adhesive (172) and initiating the curable adhesive (172).

8. The pressing machine (100) of claim 6 or 7, further comprising:
a support structure (220) placed, at least partly, within the inner volume of the at least one nip roller (200), the at least one energy source (210) being secured to the support structure (220).

9. A system comprising:
a printer (130) to deposit a pre-determined pattern of curable adhesive (172) on a substrate (170); and
a pressing machine (100) as claimed in any one of claims 6, 7 or 8.

10. The system of claim 9, wherein the printer includes one or more of: an inkjet printer, a toner-based printer, a silk screen printer and a lithography-based printer.

11. The system of claim 9 or 10, wherein the at least one nip roller includes:
a first set of nip rollers (310) positioned proximate to the entry stage of the pressing machine (300) to press the layer material (360) to the adhesive (372) deposited on the substrate (370) when the substrate (370) is substantially received in the pressing machine (300); and
a second set of nip rollers (312) positioned proximate to an exit stage of the pressing machine (300) to press the layer material (360) to the cured adhesive deposited on the substrate after application of energy by the at least one energy source (320).

12. The system of claim 9, 10 or 11, further comprising:
a conveyor belt (340) to move the substrate (370) having the curable adhesive (372) deposited on it through the pressing machine (300).

13. The system of any one of claims 9 to 12, further comprising:
a peeler (390) to peel off excess layer material not adhered to any portion of the cured adhesive.

14. A method comprising:
pressing by a nip roller (110) a layer material (160) to a substrate (170) including a curable adhesive (172) deposited thereon; and
applying energy from at least one energy source (120) to the pressed layer material (160) and the substrate (170), the at least one energy source (120) disposed within an inner volume of the nip roller (110), where the said nip roller (110) comprises a cooling mechanism to control the temperature in its inner volume.

## Patentansprüche

1. Anpresswalze, die Folgendes umfasst:
eine hohle Walze (110), um Materialien zu pressen, wobei wenigstens ein Abschnitt der hohlen Walze (110) aus einem Material aufgebaut ist, das dafür konfiguriert ist, einen Durchgang von Energie zu ermöglichen,
wenigstens eine Energiequelle (120), die innerhalb eines inneren Volumens der hohlen Walze (110) angeordnet ist, um Energie zu erzeugen, wobei wenigstens etwas von der Energie durch wenigstens den Abschnitt der hohlen Walze (110), der aus dem Material aufgebaut ist, das dafür konfiguriert ist, einen Durchgang von Energie zu ermöglichen, geleitet wird, um zu veranlassen, dass ein Aushärtungsvorgang für einen aushärtbaren Klebstoff (172), der auf einem Substrat (170) abgesetzt und gegen ein Schichtmaterial (160) gepresst wird, stattfindet, und
einen Kühlungsmechanismus, um die Temperatur in dem inneren Volumen der Anpresswalze zu regeln.

2. Anpresswalze nach Anspruch 1, wobei das Material, das dafür konfiguriert ist, einen Durchgang von wenigstens etwas von der erzeugten Energie zu ermöglichen, strahlungsdurchlässiges Material einschließt, das eines oder mehrere der folgenden einschließt: Polypropylen, Glas, Quarz und Polycarbonat.

3. Anpresswalze nach Anspruch 1 oder 2, wobei die wenigstens eine Energiequelle eines oder mehrere der folgenden einschließt: eine Ultraviolett-Strahlungsquelle, eine Lampe zum Erzeugen von inkohärenter optischer Strahlung, eine Elektronenstrahl-Strahlungsquelle, eine Laserquelle und ein Heizelement.

4. Anpresswalze nach Anspruch 1, 2 oder 3, die ferner Folgendes umfasst:
einen Energieleitungsmechanismus (230), um die durch die wenigstens eine Energiequelle erzeugte Energie zu einem Bereich von wenigstens dem Abschnitt der Anpresswalze, der aus dem Material aufgebaut ist, das dafür konfiguriert ist, einen Durchgang von Energie zu ermöglichen, zu leiten.

5. Anpresswalze nach Anspruch 1, 2, 3 oder 4, wobei der Kühlungsmechanismus Folgendes umfasst: einen hohlen Reflektor (430), der eine reflektierende Oberfläche (432) einschließt, die der wenigstens einen Energiequelle gegenüberliegt, wobei die reflektierende Oberfläche dafür konfiguriert ist, selektiv Strahlung mit einer oder mehreren vorbestimmten Wellenlängen (440) zu reflektieren und Strahlung mit einer oder mehreren anderen vorbestimmten Wellenlängen (442) durchzulassen, und
Kühlungsmedium (450) innerhalb eines Inneren (434) des hohlen Reflektors (430), um eines oder mehreres von Absorbieren und Entfernen der einen oder mehreren anderen vorbestimmten Wellenlängen (442), die durch die reflektierende Oberfläche hindurchgingen, auszuführen.

6. Pressmaschine (100), um Schichtmaterial (160) auf einen aushärtbaren Klebstoff (172) zu pressen, der auf einem Substrat (170) abgesetzt ist, das an einer Eintrittsstufe der Pressmaschine (100) aufgenommen wird, wobei die Pressmaschine (100) wenigstens eine Anpresswalze nach einem der vorhergehenden Ansprüche umfasst.

7. Pressmaschine (100) nach Anspruch 6, die ferner Folgendes umfasst:
wenigstens eine andere Energiequelle (124), die stromaufwärts von der wenigstens einen Anpresswalze (110) angeordnet ist, wobei die wenigstens eine andere Energiequelle (124) dafür konfiguriert ist, Energie zu richten, um eines von einem Voraushärten des aushärtbaren Klebstoffs (172) und einem Einleiten des aushärtbaren Klebstoffs (172) zu veranlassen.

8. Pressmaschine (100) nach Anspruch 6 oder 7, die ferner Folgendes umfasst:
eine Stützstruktur (220), die, wenigstens teilweise, innerhalb des inneren Volumens der wenigstens einen Anpresswalze (200) angeordnet ist, wobei die wenigstens eine Energiequelle (210) an der Stützstruktur (220) befestigt ist.

9. System, das Folgendes umfasst:
einen Drucker (130), um ein vorbestimmtes Muster eines aushärtbaren Klebstoffs (172) auf einem Substrat (170) abzusetzen, und
eine Pressmaschine (100) nach einem der Ansprüche 6, 7 oder 8.

10. System nach Anspruch 9, wobei der Drucker eines oder mehrere der folgenden einschließt: einen Tintenstrahldrucker, einen tonerbasierten Drucker, einen Siebdrucker und einen lithographiebasierten Drucker.

11. System nach Anspruch 9 oder 10, wobei die wenigstens eine Anpresswalze Folgendes einschließt:
einen ersten Satz von Anpresswalzen (310), der nahe der Eintrittsstufe der Pressmaschine (300) angeordnet ist, um das Schichtmaterial (360) auf den Klebstoff (372) zu pressen, der auf dem Substrat (370) abgesetzt ist, wenn das Substrat (370) im Wesentlichen in der Pressmaschine (300) aufgenommen wird, und
einen zweiten Satz von Anpresswalzen (312), der nahe einer Austrittsstufe der Pressmaschine (300) angeordnet ist, um das Schichtmaterial (360) nach der Anwendung von Energie durch die wenigstens eine Energiequelle (320) auf den ausgehärteten Klebstoff zu pressen.

12. System nach Anspruch 9, 10 oder 11, das ferner Folgendes umfasst:
ein Förderband (340), um das Substrat (370), das den auf demselben abgesetzten aushärtbaren Klebstoff (372) hat, durch die Pressmaschine (300) zu bewegen.

13. System nach einem der Ansprüche 9 bis 12, das ferner Folgendes umfasst:
eine Abziehvorrichtung (390), um überschüssiges Schichtmaterial, das nicht an irgendeinen Abschnitt des ausgehärteten Klebstoffs geklebt ist, abzuziehen.

14. Verfahren, das Folgendes umfasst:
das Pressen eines Schichtmaterials (160) auf ein Substrat (170), das einen aushärtbaren Klebstoff (172) einschließt, der auf demselben abgesetzt ist, durch eine Anpresswalze (110) und
das Anwenden von Energie von wenigstens einer Energiequelle (120) auf das gepresste Schichtmaterial (160) und das Substrat (170), wobei die wenigstens eine Energiequelle (120) innerhalb eines inneren Volumens der Anpresswalze (110) angeordnet ist, wobei die Anpresswalze (110) einen Kühlungsmechanismus umfasst, um die Temperatur in ihrem inneren Volumen zu regeln.

## Revendications

1. Rouleau pinceur comprenant :
un rouleau creux (110) pour presser des matériaux, au moins une partie du rouleau creux (110) étant construite à partir d'un matériau configuré pour permettre un passage d'énergie ;
au moins une source d'énergie (120) fournie au sein d'un volume intérieur du rouleau creux (110) pour générer de l'énergie, au moins une partie de ladite énergie étant dirigée à travers au moins la partie du rouleau creux (110) construite à partir du matériau configuré pour permettre un passage d'énergie afin de provoquer un durcissement d'un adhésif durcissable (172) déposé sur un substrat (170) et pressé contre un matériau de couche (160) ; et
un mécanisme de refroidissement afin de commander la température dans le volume intérieur du rouleau pinceur.

2. Rouleau pinceur selon la revendication 1, dans lequel le matériau configuré pour permettre un passage d'au moins une partie de l'énergie générée comprend un matériau transparent au rayonnement comprenant un ou plusieurs parmi : polypropylène, verre, quartz, et polycarbonate.

3. Rouleau pinceur selon la revendication 1 ou 2, dans lequel la au moins une source d'énergie comprend un ou plusieurs parmi : une source de rayonnement ultraviolet, une lampe générant un rayonnement optique incohérent, une source de rayonnement de faisceau d'électrons, une source laser et un élément chauffant.

4. Rouleau pinceur selon l'une quelconque des revendications 1, 2 ou 3, comprenant en outre :
un mécanisme de guidage d'énergie (230) afin de diriger l'énergie générée par la au moins une source d'énergie vers une zone d'au moins la partie du rouleau pinceur construite à partir du matériau configuré pour permettre un passage d'énergie.

5. Rouleau pinceur selon l'une quelconque des revendications 1, 2, 3 ou 4, dans lequel le mécanisme de refroidissement comprend un réflecteur creux (430) comprenant une surface réfléchissante (432) faisant face à la au moins une source d'énergie, la surface réfléchissante étant configurée pour réfléchir de manière sélective un rayonnement d'une ou plusieurs longueur(s) d'onde (440) prédéterminée(s), et pour laisser passer un rayonnement d'une ou plusieurs autre(s) longueur(s) d'onde (442) prédéterminée(s) ; et
un agent de réfrigération (450) au sein d'un intérieur (434) du réflecteur creux (430) afin de mettre en oeuvre une ou plusieurs étapes parmi celles consistant à absorber et retirer l'autre ou les autres longueur(s) d'onde (442) prédéterminée(s) qui est ou sont passée(s) à travers la surface réfléchissante.

6. Machine à presser (100) pour presser un matériau de couche (160) contre un adhésif durcissable (172) déposé sur un substrat (170) reçu au niveau d'un étage d'entrée de la machine à presser (100), la machine à presser (100) comprenant au moins un rouleau pinceur selon l'une quelconque des revendications précédentes.

7. Machine à presser (100) selon la revendication 6, comprenant en outre :
au moins une autre source d'énergie (124) positionnée en amont du au moins un rouleau pinceur (110), la au moins une autre source d'énergie (124) étant configurée pour diriger de l'énergie afin de provoquer un prédurcissement de l'adhésif durcissable (172) ou un début de durcissement de l'adhésif durcissable (172).

8. Machine à presser (100) selon la revendication 6 ou 7, comprenant en outre :
une structure de support (220) placée, au moins partiellement, au sein du volume intérieur du au moins un rouleau pinceur (200), la au moins une source d'énergie (210) étant fixée à la structure de support (220).

9. Système comprenant :
une imprimante (130) pour déposer un motif prédéterminé d'adhésif durcissable (172) sur un substrat (170) ; et
une machine à presser (100) selon l'une quelconque des revendications 6, 7 ou 8.

10. Système selon la revendication 9, dans lequel l'imprimante comprend une ou plusieurs parmi : une imprimante à jet d'encre, une imprimante à toner, une presse à sérigraphie et une presse à lithographie.

11. Système selon la revendication 9 ou 10, dans lequel le au moins un rouleau pinceur comprend :
un premier jeu de rouleaux pinceurs (310) positionnés à proximité de l'étage d'entrée de la machine à presser (300) pour presser le matériau de couche (360) contre l'adhésif (372) déposé sur le substrat (370) lorsque le substrat (370) est essentiellement reçu dans la machine à presser (300) ; et
un second jeu de rouleaux pinceurs (312) positionnés à proximité d'un étage de sortie de la machine à presser (300) pour presser le matériau de couche (360) contre l'adhésif durci déposé sur le substrat après application d'une énergie grâce à la au moins une source d'énergie (320).

12. Système selon l'une quelconque des revendications 9, 10 ou 11, comprenant en outre :
une bande transporteuse (340) pour déplacer à travers la machine à presser (300) le substrat (370) sur lequel est déposé l'adhésif durcissable (372).

13. Système selon l'une quelconque des revendications 9 à 12, comprenant en outre :
une machine à peler (390) pour peler l'excédent de matériau de couche qui n'a pas adhéré à une quelconque partie de l'adhésif durci.

14. Procédé comprenant les étapes consistant à :
presser, grâce à un rouleau pinceur (110), un matériau de couche (160) contre un substrat (170) comportant un adhésif durcissable (172) déposé sur celui-ci; et
appliquer au matériau de couche (160) pressé et au substrat (170) une énergie provenant d'au moins une source d'énergie (120), la au moins une source d'énergie (120) étant fournie au sein d'un volume intérieur du rouleau pinceur (110), ledit rouleau pinceur (110) comprenant un mécanisme de refroidissement pour commander la température dans son volume intérieur.
